(19) Europäisches Patentamt
European Patent Office
Office européen des brevets

(11) Veröffentlichungsnummer: **0 443 131 B1**

(12) **EUROPÄISCHE PATENTSCHRIFT**

(45) Veröffentlichungstag der Patentschrift: **05.10.94**

(21) Anmeldenummer: **90123783.4**

(22) Anmeldetag: **11.12.90**

(51) Int. Cl.5: **C08L 69/00**, //(C08L69/00, 51:04,25:02,87:00),(C08L69/00, 51:04,33:12,87:00)

# (54) Benzinbeständige thermoplastische Formmasse.

(30) Priorität: **17.02.90 DE 4005118**

(43) Veröffentlichungstag der Anmeldung:
**28.08.91 Patentblatt 91/35**

(45) Bekanntmachung des Hinweises auf die Patenterteilung:
**05.10.94 Patentblatt 94/40**

(84) Benannte Vertragsstaaten:
**DE FR GB IT NL**

(56) Entgegenhaltungen:
**EP-A- 0 292 785**
**US-A- 3 856 886**

(73) Patentinhaber: **BAYER AG**

**D-51368 Leverkusen (DE)**

(72) Erfinder: **Dujardin, Ralf, Dr.**
**Bodelschwinghstrasse 18**
**W-4150 Krefeld (DE)**
Erfinder: **Schoeps, Jochen, Dr.**
**Windmühlenstrasse 126**
**W-4150 Krefeld 1 (DE)**
Erfinder: **Wandel, Martin, Dr.**
**Donatusstrasse 17**
**W-4047 Dormagen 11 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Legierungen aus ABS und Polycarbonat werden verwendet, wenn die Eigenschaften von ABS nicht ausreichen. Solche Legierungen stellen im allgemeinen ein ternäres Gemisch aus Polycarbonat, Styrolacrylnitrilcopolymerisat und einem Pfropfpolymerisat von Styrol und Acrylnitril auf Polybutadien dar.

Legierungen aus ABS und Polycarbonat sind amorphe Thermoplaste und besitzen hohe Maßgenauigkeit, geringe Verzugsneigung und geringe Feuchtigkeitsaufnahme, hohe Formbeständigkeit in der Wärme, (steigend mit zunehmendem Polycarbonat-Gehalt) und gute Beständigkeit gegen Säuren und Laugen (H. Domininghaus in "Die Kunststoffe und ihre Eigenschaften", VDI-Verlag, 1986, S. 253).

Die Beständigkeit gegen Aromaten und Chlorkohlenwasserstoffe hingegen ist wegen des Anteils an Polycarbonat gering.

Es wurde gefunden, daß Legierungen aus ABS und Polycarbonat durch Zusatz von speziellen Vinylcopolymerisaten in ihrer Benzinbeständigkeit und gleichzeitig ihrer Wärmeformbeständigkeit verbessert werden können.

Gegenstand der Erfindung sind thermoplastische Polymerlegierungen, enthaltend

A. 40 bis 48 Gew.-Teile, vorzugsweise 45 Gew.-Teile, eines thermoplastischen aromatischen Polycarbonats,

B. 30 bis 40 Gew.-Teile, vorzugsweise 33 Gew.-Teile, eines Pfropfpolymerisatgemisches aus

B.1 einem Pfropfpolymerisat aus 5 bis 90 Gew.-Teilen, vorzugsweise 30 bis 80 Gew.-Teilen, einer Mischung aus

B.1.1 50 bis 95 Gew.-% Styrol, α-Methylstyrol, kernsubstituiertem Styrol, Methylmethacrylat oder Mischungen daraus und

B.1.2 5 bis 50 Gew.-% Acrylnitril, Methacrylnitril oder Mischungen daraus auf

B.2 95 bis 10 Gew.-Teile, vorzugsweise 70 bis 20 Gew.-Teile, eines teilchenförmigen Kautschuks mit einem mittleren Teilchendurchmesser von 0,09 bis 5 µm, bevorzugt 0,1 bis 1 µm.

C. 10 bis 25 Gew.-Teile eines thermoplastischen Copolymerisats mit einem Molekulargewicht $\overline{M}w$ (Gewichtsmittel) von 15.000 bis 200.000 (gemessen durch Lichtstreuung oder Sedimentation) aus

C.1 50 bis 95 Gew.-% Styrol, α-Methylstyrol, kernsubstituiertem Styrol, Methylmethacrylat oder Mischungen daraus, und

C.2 50 bis 5 Gew.-% (Meth)Acrylnitril, Methylmethacrylat, Maleinsäureanhydrid, N-substituiertem Maleinimid oder Mischungen daraus,

und

D. 1 bis 10 Gew.-Teile, vorzugsweise 1 bis 5 Gew.-Teile eines Pfropfpolymerisats von Polycarbonatketten auf ein Copolymerisat (Pfropfgrundlage), das hergestellt worden ist, indem man 95 bis 99,5 Mol Styrol und 5 bis 0,5 Mol einer Verbindung der Formel (I)

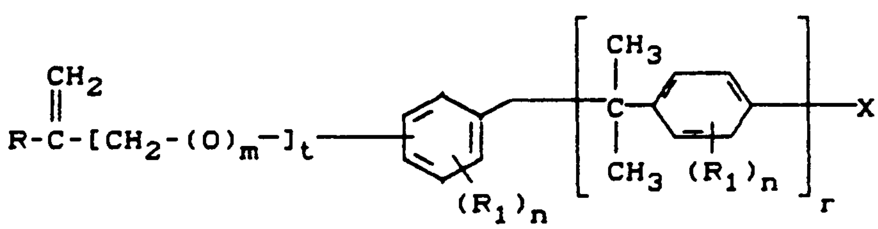

(I),

worin

R = H oder $C_1$-$C_4$-Alkyl,

$R_1$ = Cl, Br, $C_1$-$C_4$-Alkyl, Cyclohexyl oder $C_1$-$C_4$-Alkoxy,

m = 0 oder 1,

n = 0, 1 oder 2,

r = 0 oder 1,

t = 0 oder 1 und

x = $-O-Si(CH_3)_3$ sind,

durch radikalische initiierte Massepolymerisation bis zu einem Molekulargewicht $\overline{M}n$ (Zahlenmittel) von 45.000 bis 95.000 copolymerisiert, und dann dieses Polymerisat ohne Isolierung mit Diphenolen, Phosgen und Monophenolen in wäßrig-alkalischer Phase in Anwesenheit eines inerten organischen Lösungsmittels unter Bedingungen der Zweiphasengrenzflächenpolykondensation so umsetzt, daß der Anteil der Polycarbonatketten im Pfropfpolymerisat 65 Gew.-% bis 45 Gew.-% ist, die Polycarbonatketten einen Polykondensationsgrad von 35 bis 70 aufweisen und die Endviskosität der organischen Phase der Reaktionsmischung 5 bis 25 mPa.s, vorzugsweise 10 bis 20 mPa.s, ist.

Endviskosität ist die mit einem Höppler-Viskosimeter bestimmte absolute Viskosität der organischen Phase des Reaktionsgemisches nach abgeschlossener Polykondensation bei 20 °C.

Aus der US-A-3 856 886 sind Mischungen aus Polycarbonaten, Polymerisaten und Pfropfpolymerisaten mit aufgepfropften Polycarbonaten bekannt.

Diesen Mischungen werden gute Fließeigenschaften und gute mechanische Eigenschaften in Kombination mit einer verbesserten Beständigkeit gegen heißes Wasser und alkalische Lösungen zugesprochen.

Aus der EP-A-0 104 695 sind Mischungen aus einem oder mehreren Pfropfpolymerisaten, einem oder mehreren Copolymerisaten, einem oder mehreren Polycarbonaten und einem oder mehreren Polyurethanen, bekannt. Diesen Mischungen werden eine gute Benzinbeständigkeit, gute Verarbeitungseigenschaften und insbesondere ein gutes Fließverhalten zugeschrieben.

In der DE-A-3 436 454 wird über die Verwendung von speziellen Copolymerisaten auf Basis von Vinylaromaten, Vinylcyaniden und/oder Estern der (Meth)Acrylsäure zur Erhöhung der Wärmeformbeständigkeit berichtet.

In den erfindungsgemäßen Polymerlegierungen wird dagegen gleichzeitige Verbesserung der Benzinbeständigkeit und der Verbesserung der Wärmeformbeständigkeit beobachtet.

Erfindungsgemäß geeignete Polycarbonate A sind solche auf Basis der Diphenole der Formel (II)

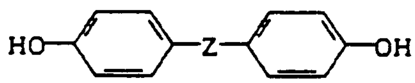

(II),

worin

Z eine Einfachbindung, ein Alkylen-Rest mit 1 bis 8 C-Atomen, ein Alkyliden-Rest mit 2 bis 12 C-Atomen, ein Cyclohexyliden-Rest, ein Benzyliden-Rest, ein Methyl-benzyliden-Rest, ein Bis-(phenyl)-methylen-Rest, -S-, $-SO_2-$, -CO- oder -O- ist, wobei die durch Z verknüpften Phenylen-Keime noch durch Methyl, Brom oder Chlor ein- oder zweifach substituiert sein können,

und gegebenenfalls zusätzlich der Formel (III)

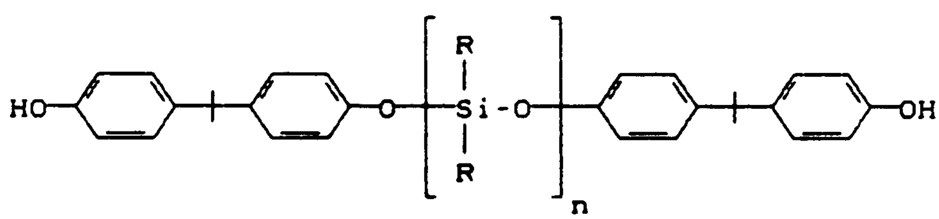

(III),

worin

R = $C_1$-$C_6$-Alkyl, vorzugsweise $CH_3$-, und

n = 20 bis 200, vorzugsweise 40 bis 80, sind.

Geeignete Diphenole der Formel (II) sind auch solche der Formel (IIa)

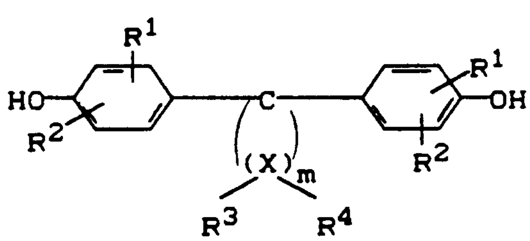

(IIa),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$, | für jedes X individuell wählbar, unabhängig voneinander Wasserstoff oder $C_1$-$C_6$-Alkyl und |
| X | Kohlenstoff bedeuten, mit der Maßgabe, daß an mindestens einem Atom X $R^3$ und $R^3$ gleichzeitig Alkyl bedeuten. |

Hierbei sind an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyl-disubstitution in $\beta$-Stellung zu C-1 bevorzugt.

Insbesondere sind hierbei bevorzugt Dihydroxydiphenylcycloalkane mit 5 und 6 Ring-C-Atomen im cycloaliphatischen Rest (m = 4 oder 5 in Formel (IIa) wie beispielsweise die Diphenole der Formeln

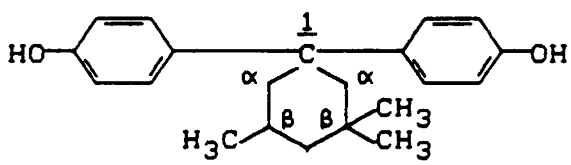

(IIa 1)

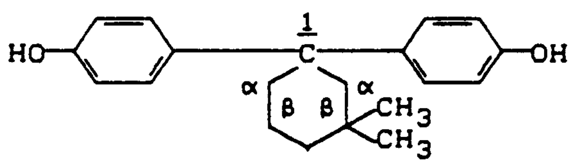

(IIa 2)

und

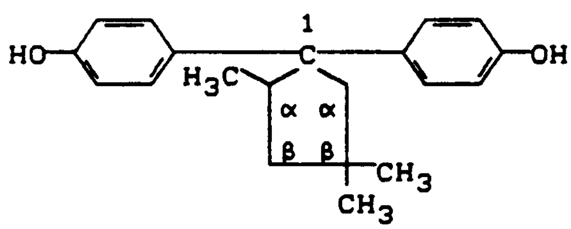

(IIa 3),

.

wobei das 1,1-Bis-(4-hydroxyphenyl)-3,3,5-trimethylcyclohexan (Formel IIa 1)) besonders bevorzugt ist.

Die Diphenole der Formel (Ia), ihre Herstellung und ihre Verwendung, gegebenenfalls in Kombination mit anderen Diphenolen, zur Herstellung von Homopolycarbonaten und Copolycarbonaten ist Gegenstand der deutschen Patentanmeldung DE-A-3 832 396.6.

Die Herstellung von Polycarbonaten A, beispielsweise aus den Diphenolen der Formel (I), ist bekannt oder nach bekannten Verfahren möglich. (Siehe hierzu beispielsweise H. Schnell, Chemistry and Physics of Polycarbonates, Interscience Publishers, New York, 1964, oder US-A-3 028 365 und 3 275 601).

Beispiele für Diphenole der Formel (II) sind:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,

Bis-(hydroxyphenyl)-ketone,
Bis-(hydroxyphenyl)-sulfone,
Bis-(hydroxyphenyl)-sulfoxide,
α,α'-Bis(hydrpxyphenyl)-diisopropylbenzole
sowie deren kernalkylierte und kernhalogenierte Verbindungen.

Diese und weitere geeignete Diphenole der Formel (II) sind z.B. in den US-A-3 028 365, 2 999 835, 3 148 172, 3 275 601, 2 991 273, 3 271 367, 3 062 781, 2 970 131 und 2 999 846, in den deutschen Offenlegungsschriften DE-A-1 570 703, 2 063 050, 2 063 052, 2 211 056, der französischen Patentschrift FR-A-1 561 518 und in der Monographie "H. Schnell, Chemistry and Physics of Polycarbonates, Interscience Publishers, New York 1964", beschrieben.

Bevorzugte Diphenole der Formel (II) sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan sowie die Diphenole II1), II2) und II3).

Besonders bevorzugte Diphenole der Formel (II) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan der Formel (IIa 1).

Insbesondere ist 2,2-Bis-(4-hydroxyphenyl)-propan und 1,1-Bis-(4-hydroxyphenyl)-3,3,5-trimethylcyclohexan bevorzugt.

Die Diphenole der Formel (II) können sowohl einzeln als auch im Gemisch eingesetzt werden.

Geeignete Diphenole der Formel (III) sind beispielsweise solche der Formel (IIIa)

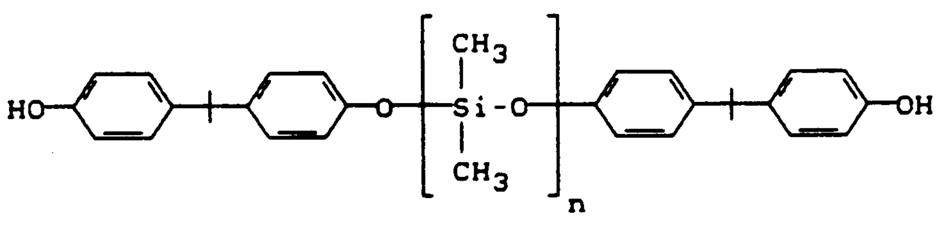

(IIIa)

worin
n = 40, 60 oder 80 ist.

Die Polycarbonate A haben mittlere Molekulargewichte ($\overline{M}w$, Gewichtsmittel, gemessen beispielsweise durch Ultrazentrifugation oder Streulichtmessung) von 10.000 bis 200.000, vorzugsweise von 20.000 bis 80.000.

Die Polycarbonate A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolycarbonat die Copolycarbonate von Bisphenol A mit 1,1-Bis-(4-hydroxyphenyl)-3,3,5-trimethylcyclohexan oder die Copolycarbonate der Diphenole der Formel (II) mit 1 bis 20 Gew.-% an Diphenolen der Formel (III), vorzugsweise der Formel (IIIa), bezogen jeweils auf die Gewichtssumme der Diphenole (II) und (III).

Zur Herstellung der Pfropfpolymerisate B geeignete Kautschuke sind insbesondere Polybutadien, Butadien/Styrol-Copolymerisate mit bis zu 30 Gew.-%, bezogen auf Kautschuk, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren, Polychloropren, Alkylacrylatkautschuke auf der Basis von $C_1$-$C_8$-Alkylacrylaten, insbesondere Ethyl-, Butyl-, Ethylhexylacrylat. Die Alkylacrylatkautschuke können gegebenenfalls bis zu 30 Gew.-%, bezogen auf Kautschuk, Vinylacetat, Acrylnitril, Styrol, Methylmethacrylat und/oder Vinylether, copolymerisiert enthalten. Die Alkylacrylatkautschuke können kleinere Mengen, vorzugsweise bis zu 5 Gew.-%, bezogen auf Kautschuk, vernetzend wirkende Monomere einpolymerisiert enthalten, zum Beispiel Alkylendiol-di(meth)-acrylate, Polyesterdi-(meth)-acrylat, Divinylbenzol, Tri-Vinylbenzol, Triallylcyanurat, Allyl-(meth)-acrylat, Butadien oder Isopren. Geeignete Acrylatkautschuke sind auch Produkte mit Kern/Mantel -Struktur, die einen vernetzten Dienkautschuk, wie Polybutadien oder SBR, als Kern enthalten. Geeignet sind auch EPDM-Kautschuke, Kautschuke aus Ethylen, Propylen und einem unkonjugierten Dien.

Bevorzugt sind Dien- und Alkylacrylatkautschuke.

Die Kautschuke liegen in den Pfropfpolymerisaten B. in Form wenigstens partiell vernetzter Teilchen eines mittleren Teilchendurchmessers von 0,09 bis 5 $\mu$m, insbesondere 0,1 bis 1 $\mu$m, vor. Die Pfropfpolymerisate B werden durch radikalische Pfropfcopolymerisation des Monomerengemischs B.1.1 und B.1.2 in Gegenwart der Kautschuke B.2 hergestellt.

Bevorzugte Herstellungsverfahren für die Pfropfpolymerisate sind Emulsions-, Lösungs-, Masse- oder Suspensionspolymerisation. Besonders bevorzugte Pfropfpolymerisate B sind ABS-Polymerisate.

Bevorzugte Copolymerisate C werden erhalten aus C.1 Styrol, $\alpha$-Methylstyrol, kernsubstituiertem Styrol einerseits und C.2 Acrylnitril, Methacrylnitril, Methylmethacrylat, Maleinsäureanhydrid, N-subst.-Maleinimid andererseits. Als kernsubstituierte Styrole seien Halogenstyrole und p-Methylstyrol erwähnt.

Copolymerisate C entstehen häufig bei der Herstellung der Pfropfpolymerisate B als Nebenprodukte, besonders dann, wenn große Mengen Monomere auf kleine Mengen Kautschuk gepfropft werden.

Die erfindungsgemäß einzusetzende Menge an Copolymerisate C von 10 bis 25 Gew.-Teilen, bezogen auf 100 Gew.-Teile aus A + B + C + D, bezieht diese Nebenprodukte der Pfropfpolymerisation nicht mit ein,

Die Copolymerisate C sind harzartig, thermoplastisch und kautschukfrei. Besonders bevorzugte Copolymerisate C sind solche aus Styrol mit Acrylnitril und gegebenenfalls mit Methylmethacrylat, aus $\alpha$-Methylstyrol mit Acrylnitril und gegebenenfalls mit Methylmethacrylat oder aus Styrol und $\alpha$-Methylstyrol mit Acrylnitril und gegebenenfalls mit Methylmethacrylat.

Besonders bevorzugte Gewichtsverhältnisse im thermoplastischen Copolymerisat C sind 60 bis 80 Gew.-% C.1 und 40 bis 20 Gew.-% C.2.

Die Copolymerisate C sind bekannt und lassen sich durch radikalische Polymerisation, insbesondere durch Emulsions-, Suspensions-, Lösungs- oder Massepolymerisation herstellen. Die Copolymerisate C besitzen Molekulargewichte $\overline{M}w$ (Gewichtsmittel, ermittelt durch Lichtstreuung oder Sedimentation) von 15.000 bis 200.000.

Die Pfropfcopolymeren D und ihre Herstellung werden in der DE-A-3 717 172 beschrieben, auf die hier verwiesen wird.

Die erfindungsgemäßen thermoplastischen Polymerlegierungen können hergestellt werden, indem man die Komponenten A, B, C, D und gegebenenfalls Stabilisatoren, Pigmente, Fließmittel, Entformungsmittel, Flammschutzmittel und/oder Antistatika vermischt und bei Temperaturen von 200 bis 330 °C in gebräuchlichen Aggregaten schmelzcompoundiert oder schmelzextrudiert.

Die Bestandteile können in bekannter Weise sowohl sukzessive als auch simultan vorgemischt werden bei etwa 20 °C (Raumtemperatur) oder bei höherer Temperatur.

Die Polymerlegierungen dieser Erfindung können zur Herstellung von Formkörpern jeder Art verwendet werden.

Insbesondere können Formkörper durch Spritzguß hergestellt werden, Beispiele für Formkörper sind: Gehäuseteile jeder Art (z.B. für Haushaltsgeräte wie Saftpressen, Kaffeemaschinen, Mixer) oder Abdeckplatten für den Bau und vorzugsweise Kraftfahrzeugteile, die mit Benzin oder anderen Kunststoffen in Kontakt kommen können.

Die erfindungsgemäßen Polymerlegierungen werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchendurchmesser bedeutet immer mittlerer Teilchendurchmesser $d_{50}$, ermittelt durch Ultrazentrifugenmessungen nach W. Scholtan et al., Kolloid-Z.u.Z. Polymere 250 (1972) 782-796).

Beispiele

Eingesetzte Komponenten

Eingesetztes Polycarbonat A:

Lineares Polycarbonat auf Basis Bisphenol A mit einer Lösungsviskosität von 1,28, gemessen in $CH_2Cl_2$ bei 25 °C und in einer Konzentration von 0,5 g/100 ml.

Pfropfpolymerisat B:

SAN-Pfropfpolymerisat von 50 % Styrol/Acrylnitril-Gemisch (im Gew.-Verhältnis von 72:28) auf 50 % teilchenförmiges Polybutadien mit einer mittleren Teilchengröße ($d_{50}$) von 0,4 µm, erhalten durch Emulsionspolymerisation.

Copolymerisat C:

Styrol/Acrylnitril-Copolymerisat mit einem Styrol/Acrylnitril-Verhältnis von 70:30 und einer Grenzviskosität von $[\eta]$ = 0,75 dl/g (Messung in Dimethylformamid bei 20 °C).

Herstellung der Pfropfcopolymeren D:

Beispiel 1

a) Pfropfgrundlage
erhalten durch Copolymerisation von 1.950 g Styrol und 50 g 4-Trimethylsiloxy-α-methylstyrol in Masse in Gegenwart von 2 g α,α'-Azodiisobutyronitril unter Stickstoff bei 80 °C innerhalb von 29 Stunden.

Das mittlere Molekulargewicht, ermittelt durch Gelpermeationschromatographie, wurde zu $\overline{M}_n$ = 68.377 g/Mol bestimmt.

b) Pfropfungsreaktion
Innerhalb von einer Stunde werden bei 20 bis 25 °C unter Rühren 1,1 kg (11,1 Mol) Phosgen in ein Gemisch aus 2,223 kg (9,75 Mol) 2,2-Bis(4-hydroxyphenyl)-propan (BPA); 43,9 g (≙ 3 Mol-% bezogen auf BPA) p-tert.-Butylphenol; 2,3 kg 45 %iger Natronlauge; 40 l Wasser, 20 kg Chlorbenzol und 1,95 kg der unter a) beschriebenen Pfropfgrundlage gelöst in 20 kg Methylenchlorid eingeleitet. Anschließend werden 19 ml (≙ 1 Mol-% bezogen auf BPA) N-Ethylpiperidin zugesetzt und 1 h lang nachgerührt. Die organische Phase wird abgetrennt, elektrolytfrei gewaschen und nach Abdestillieren des Methylenchlorids bei 300 °C extrudiert. Es wurden 3,9 kg Produkt erhalten, mit einer rel. Lösungsviskosität $\eta_{rel}$ = 1,482. Das berechnete Molekulargewicht der Polycarbonatseitenäste/Pfropfstelle beträgt $\overline{M}_n$ = 13.293 g/Mol, was einem Polykondensationsgrad $\overline{p}$ von 52 entspricht.

Zur Bestimmung der Benzinbeständigkeit wurden Prüfkörper mit den Maßen 80 mm x 10 mm x 4 mm hergestellt, die auf Biegeschablonen verschiedener Krümmungsradien so eingespannt wurden, daß Randfaserdehnungen $\epsilon_R$ von 0, % bzw. 1,0 % resultierten. Die Schablonen wurden mit aufgebrachter Probe 15 Minuten bei 70 °C in einem Wärmeschrank (mit Luftdurchwirbelung nach DIN 50 011, 2, 3) gelagert.

Die Schablonen mit den Proben wurden aus dem Schrank entnommen und unmittelbar danach ein Prüfkraftstoffgetränkter Wattebausch aufgelegt. Als Prüfkraftstoff wurde ein Testbenzin nach DIN 51 604 verwendet, das sich aus 50 Vol-% Toluol, 30 Vol-% Isooctan, 15 Vol-% Diisobutylen und 5 Vol-% Ethanol zusammensetzt, Nach 15 Min, Einwirkdauer wurde der Wattebausch entfernt und weitere 15 Min. abgewartet, um die Probe ablüften zu lassen.

Anschließend wurden die Prüfkörper mit dem unbewaffneten Auge wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Die Bestimmung der verbesserten Schlagzähigkeit erfolgte ebenfalls an Prüfkörpern mit den Maßen 80 mm x 10 mm x 4 mm. Die Kerbschlagzähigkeit ($a_k$) wurde nach Izod entsprechend ISO 180/1A durchgeführt.
Die Wärmeformbeständigkeit wurde nach Methode Vicat (B) gemäß DIN 53 460 / ISO 360 bestimmt.

| Beispiele | | Vergleich | 1 |
|---|---|---|---|
| Polycarbonat A | Gew.-Tl. | 45 | 42 |
| Pfropfpolymerisat B | " | 33 | 33 |
| Copolymerisat C | " | 22 | 20 |
| Pfropfcopolymere D | " | - | 5 |
| Kerbschlagzähigkeit (Raumtemperatur) | $kJ/m^2$ | 45,8 | 69,3 |
| Wärmeformbeständigkeit | (Vicat B) | 110 | 116 |
| Benzinbeständigkeit | $\epsilon_R$ = 0,4 % | 4 | 2 |
| | $\epsilon_R$ = 1,0 % | - | 3 |

**Patentansprüche**

**1.** Thermoplastische Polymerlegierungen enthaltend

A. 40 bis 48 Gew.-Teile, vorzugsweise 45 Gew.-Teile, eines thermoplastischen aromatischen Polycarbonats,

B. 30 bis 40 Gew.-Teile, vorzugsweise 33 Gew.-Teile, eines Pfropfpolymerisatgemisches aus

B.1 einem Pfropfpolymerisat aus 5 bis 90 Gew.-Teilen, vorzugsweise 30 bis 80 Gew.-Teilen, einer Mischung aus

B.1.1 50 bis 95 Gew.-% Styrol, α-Methylstyrol, kernsubstituiertem Styrol, Methylmethacrylat oder Mischungen daraus und

B.1.2 5 bis 50 Gew.-% Acrylnitril, Methacrylnitril oder Mischungen daraus auf

B.2 95 bis 10 Gew.-Teile, vorzugsweise 70 bis 20 Gew.-Teile, eines teilchenförmigen Kautschuks mit einem mittleren Teilchendurchmesser von 0,09 bis 5 μm, bevorzugt 0,1 bis 1 μm.

C. 10 bis 25 Gew.-Teile eines thermoplastischen Copolymerisats mit einem Molekulargewicht $\overline{M}w$ (Gewichtsmittel) von 15.000 bis 200.000 (gemessen durch Lichtstreuung oder Sedimentation) aus

C.1 50 bis 95 Gew.-% Styrol, α-Methylstyrol, kernsubstituiertem Styrol, Methylmethacrylat oder Mischungen daraus, und

C.2 50 bis 5 Gew.-% (Meth)Acrylnitril, Methylmethacrylat, Maleinsäureanhydrid, N-substituiertem Maleinimid oder Mischungen daraus,

und

D. 1 bis 10 Gew.-Teile, vorzugsweise 1 bis 5 Gew.-Teile eines Pfropfpolymerisats von Polycarbonatketten auf ein Copolymerisat (Pfropfgrundlage), das hergestellt worden ist, indem man 95 bis 99,5

Mol Styrol und 5 bis 0,5 Mol einer Verbindung der Formel (I)

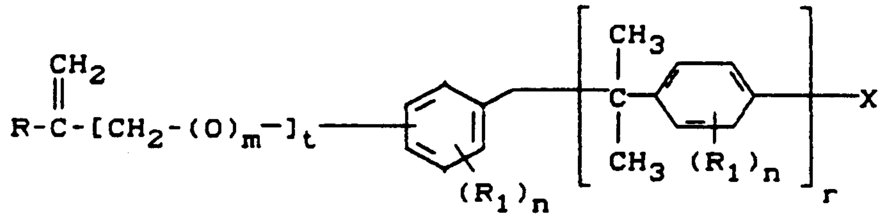

(I),

worin
R = H oder $C_1$-$C_4$-Alkyl,
$R_1$ = Cl, Br, $C_1$-$C_4$-Alkyl, Cyclohexyl oder $C_1$-$C_4$-Alkoxy,
m = 0 oder 1,
n = 0, 1 oder 2,
r = 0 oder 1,
t = 0 oder 1 und
X = $-O-Si(CH_3)_3$ sind,
durch radikalische initiierte Massepolymerisation bis zu einem Molekulargewicht $\overline{M}n$ (Zahlenmittel) von 45.000 bis 95.000 copolymerisiert, und dann dieses Polymerisat ohne Isolierung mit Diphenolen, Phosgen und Monophenolen in wäßrig-alkalischer Phase in Anwesenheit eines inerten organischen Lösungsmittels unter Bedingungen der Zweiphasengrenzflächenpolykondensation so umsetzt, daß der Anteil der Polycarbonatketten im Pfropfpolymerisat 65 Gew.-% bis 45 Gew.-% ist, die Polycarbonatketten einen Polykondensationsgrad von 35 bis 70 aufweisen und die Endviskosität der organischen Phase der Reaktionsmischung 5 bis 25 mPa.s, vorzugsweise 10 bis 20 mPa.s, ist.

## Claims

**1.** Thermoplastic polymer blends containing

A. 40 to 48 parts by weight and preferably 45 parts by weight of a thermoplastic aromatic polycarbonate,

B. 30 to 40 parts by weight and preferably 33 parts by weight of a graft polymer mixture of

B.1 a graft polymer of 5 to 90 parts by weight and preferably 30 to 80 parts by weight of a mixture of

B.1.1 50 to 95% by weight of styrene, α-methyl styrene, nucleus-substituted styrene, methyl methacrylate or mixtures thereof and

B.1.2 5 to 50% by weight of acrylonitrile, methacrylonitrile or mixtures thereof on

B.2 95 to 10 parts by weight and preferably 70 to 20 parts by weight of a particulate rubber with an average particle diameter of 0.09 to 5 µm and preferably 0.1 to 1 µm,

C. 10 to 25 parts by weight of a thermoplastic copolymer with an average molecular weight $\overline{M}w$ (weight average) of 15,000 to 200,000 (as measured by light scattering or sedimentation) of

C.1 50 to 95% by weight of styrene, α-methyl styrene, nucleus-substituted styrene, methyl methacrylate or mixtures thereof and

C.2 50 to 5% by weight of (meth)acrylonitrile, methyl methacrylate, maleic anhydride, N-substituted maleic imide or mixtures thereof,

and

D. 1 to 10 parts by weight and preferably 1 to 5 parts by weight of a graft polymer of polycarbonate chains on a copolymer (graft base) which has been prepared by copolymerization of 95 to 99.5 mols of styrene and 5 to 0.5 mol of a compound corresponding to formula (I):

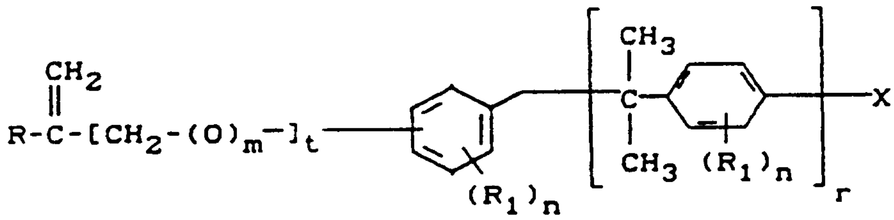

(I),

in which
R = H or $C_{1-4}$ alkyl,
$R_1$ = Cl, Br, $C_{1-4}$ alkyl, cyclohexyl or $C_{1-4}$ alkoxy,
m = 0 or 1,
n = 0, 1 or 2,
r = 0 or 1,
t = 0 or 1 and
X = $-O-Si(CH_3)_3$,
by radical-initiated bulk polymerization to a molecular weight $\overline{M}n$ (number average) of 45,000 to 95,000 and reaction of the polymer obtained without isolation with diphenols, phosgene and monophenols in aqueous/alkaline phase in the presence of an inert organic solvent under two-phase interfacial polycondensation conditions in such a way that the percentage content of polycarbonate chains in the graft polymer is 65% by weight to 45% by weight, the polycarbonate chains have a degree of polycondensation of 35 to 70 and the final viscosity of the organic phase of the reaction mixture is 5 to 25 mPa.s and preferably 10 to 20 mPa.s.

## Revendications

**1.** Combinaisons de polymères thermoplastiques contenant

A. 40 à 48 parties en poids, de préférence 45 parties en poids, d'un polycarbonate aromatique thermoplastique,

B. 30 à 40 parties en poids, de préférence 33 parties en poids, d'un mélange de polymères greffés consistant en

B.1 un polymère greffé de 5 à 90 parties en poids, de préférence 30 à 80 parties en poids, d'un mélange de

B.1.1 50 à 95 % en poids de styrène, d'α-méthylstyrène, d'un styrène substitué dans le noyau, de méthacrylate de méthyle ou leurs mélanges et

B.1.2 5 à 50 % en poids d'acrylonitrile, de méthacrylonitrile ou leurs mélanges sur

B.2 95 à 10 parties en poids, de préférence 70 à 20 parties en poids, d'un caoutchouc à l'état de particules au diamètre moyen de 0,09 à 5 µm, de préférence de 0,1 à 1 µm,

C. 10 à 25 parties en poids d'un copolymère thermoplastique de poids moléculaire moyen $\overline{M}w$ (moyenne en poids) 15 000 à 200 000 (mesure par diffraction de la lumière ou par sédimentation) de

C.1 50 à 95 % en poids de styrène, d'α-méthylstyrène, d'un styrène substitué dans le noyau, de méthacrylate de méthyle ou leurs mélanges, et

C.2 50 à 5 % en poids de (méth)acrylonitrile, de méthacrylate de méthyle, d'anhydride maléique, d'un maléimide substitué à l'azote ou leurs mélanges, et

D. 1 à 10 parties en poids, de préférence 1 à 5 parties en poids d'un polymère greffé de chaînes de polycarbonate sur un copolymère (support de greffage) qui a été préparé par copolymérisation de 95 à 99,5 mol de styrène et 5 à 0,5 mol d'un composé de formule I

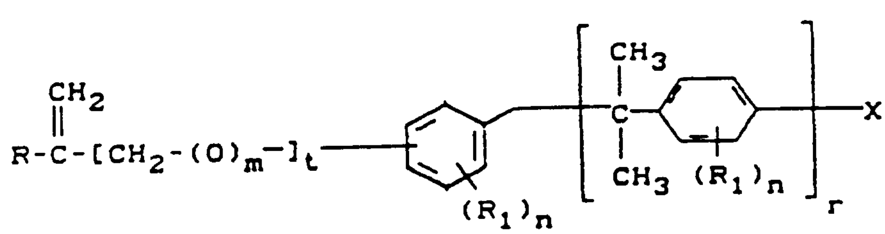

(I),

dans laquelle
R = H ou alkyle en $C_1$-$C_4$,
$R_1$ = Cl, Br, alkyle en $C_1$-$C_4$, cyclohexyle ou alcoxy en $C_1$-$C_4$,
m = 0 ou 1,
n = 0, 1 ou 2,
r = 0 ou 1,
t = 0 ou 1 et
X = -O-Si$(CH_3)_3$,
par polymérisation radicalaire en masse jusqu'à un poids moléculaire $\overline{M}n$ (moyenne en nombre) de 45 000 à 95 000, en faisant suivre de la réaction de ce polymère, sans l'isoler, avec des diphénols, du phosgène et des monophénols en phase aqueuse alcaline, en présence d'un solvant organique inerte, dans les conditions de la polycondensation à l'interface de deux phases, en sorte que la proportion des chaînes de polycarbonate dans le polymère greffé soit de 65 % en poids à 45 % en poids, que les chaînes de polycarbonate aient un degré de polycondensation de 35 à 70 et que la viscosité finale de la phase organique du mélange de réaction soit de 5 à 25 mPa.s, de préférence de 10 à 20 mPa.s.